## Europäisches Patentamt
## European Patent Office
## Office européen des brevets

(19)

(11) Numéro de publication: **0 310 530**
**A2**

(12)

# DEMANDE DE BREVET EUROPEEN

(21) Numéro de dépôt: **88420326.6**

(22) Date de dépôt: **30.09.88**

(51) Int. Cl.⁴: **F 16 K 1/02**
F 16 K 31/50

(30) Priorité: **30.09.87 FR 8713933**

(43) Date de publication de la demande:
**05.04.89 Bulletin 89/14**

(84) Etats contractants désignés:
**AT BE CH DE ES FR GB GR IT LI LU NL SE**

(71) Demandeur: **Beauvir, Jacques c/o Monsieur André Lefevre**
**30 bis, Avenue Francis de Pressensé**
**F-69200 Venissieux (FR)**

(72) Inventeur: **Beauvir, Jacques c/o Monsieur André Lefevre**
**30 bis, Avenue Francis de Pressensé**
**F-69200 Venissieux (FR)**

(74) Mandataire: **Maureau, Philippe et al**
**Cabinet Germain & Maureau Le Britannia - Tour C 20, bld**
**Eugène Déruelle Boîte Postale 3011**
**F-69392 Lyon Cédex 03 (FR)**

(54) **Vanne à commande manuelle.**

(57) Cette vanne comporte un obturateur (8) fixé à l'extrémité d'une tige de commande (7) apte à être déplacée à l'intérieur du corps de vanne (2) perpendiculairement au siège (3a) de l'obturateur à l'aide d'un système mécanique commandé manuellement (12,2b).

Elle comporte une pièce de soulèvement (13) apte à se déplacer à l'intérieur du corps de vanne (2) perpendiculairement au siège (3a) de l'obturateur et actionnée directement par le système mécanique (12,2b), le mouvement de déplacement de cette pièce (13) étant transmis à la tige de commande (7) par l'intermédiaire d'un ressort (15), lorsque cette pièce se déplace vers le bas.

**EP 0 310 530 A2**

**Description**

## VANNE A COMMANDE MANUELLE

La présente invention a pour objet une vanne à commande manuelle destinée plus particulièrement à être implantée sur des équipements industriels utilisant des gaz spéciaux, tels que les équipements pour la fabrication de fibres optiques et de semi-conducteurs.

De telles vannes doivent permettre le passage de gaz parfois très dangereux et doivent donc obéir à des critères de sécurité très sévères.

Elles sont généralement constituées d'un ensemble mobile comprenant un obturateur fixé à l'extrémité d'une tige de commande qui est apte à être déplacée à l'intérieur du corps de vanne perpendiculairement au siège de l'obturateur à l'aide d'un système mécanique (à vis ou à levier) commandé manuellement.

Dans cette conception classique, la butée de fermeture est constituée par l'obturateur lui-même entrant en contact avec son siège. L'on conçoit aisément que cette venue en butée de l'obturateur puisse détériorer le plan de joint de celui-ci, du fait que l'effort de serrage, qui est appliqué manuellement, n'est pas constant et peut prendre des valeurs supérieures à celle nécessaire à la fermeture.

L'obturateur est donc généralement marqué par les contours du siège (qui est en principe plus dur). L'effort de serrage doit être pratiquement augmenté à chaque fois pour avoir une bonne étanchéité et il faut donc changer fréquemment les obturateurs, ce qui entraîne des frais de manipulation et de réparation.

Dans les vannes manuelles connues, l'étanchéité est, en outre, généralement réalisée à l'aide d'un presse-étoupe, ce qui pose également à la longue des problèmes de fuite.

Enfin, ces vannes ne comportent généralement pas de moyens pour indiquer la position ouverte ou fermée de la vanne. Dans certaines vannes, des traits circulaires sont réalisés sur le corps même de la vanne en-dessous de la tête de la vanne, le masquage ou le démasquage de ceux-ci lors de la rotation de la tête de vanne indiquant le degré d'ouverture ou de fermeture de celle-ci.

Le but de la présente invention est de remédier à ces inconvénients et de prévoir une vanne manuelle, du type comprenant un obturateur fixé à l'extrémité d'une tige de commande apte à être déplacée à l'intérieur du corps de vanne perpendiculairement au siège de l'obturateur à l'aide d'un système mécanique commandé manuellement, qui puisse être fermée sans détérioration du plan de joint de l'obturateur et qui présente une bonne étanchéité, ainsi que des moyens pour indiquer l'état fermé ou ouvert de la vanne.

Ce but est atteint dans la vanne selon l'invention, qui est du type précité, en ce qu'elle comporte une pièce de soulèvement, apte à se déplacer à l'intérieur du corps de vanne perpendiculairement au siège de l'obturateur, et actionnée directement par le système mécanique et en ce que le mouvement de déplacement de cette pièce est transmis à la tige de commande par l'intermédiaire d'un ressort, lorsque cette pièce se déplace vers le bas.

De cette façon, l'obturateur porté par la tige de commande est appliqué contre son siège non par un effort manuel transmis par un système mécanique, mais par un ressort développant une force constante. Il n'y a donc plus aucun risque de détérioration du plan de joint de l'obturateur par application d'un effort d'intensité variable.

Avantageusement, des moyens sont prévus pour régler la force du ressort, ce qui permet de régler la pression de fermeture de la vanne.

Avantageusement aussi, des moyens sont prévus pour solidariser la tige de commande de la pièce de soulèvement, lorsque celle-ci se déplace vers le haut, ce qui permet l'ouverture de la vanne.

Selon une forme de réalisation préférée, il est prévu un ressort de compensation agissant en antagonisme du premier ressort et sollicitant la pièce de soulèvement vers le haut. Ce ressort de compensation sert à équilibrer les efforts résistants s'opposant au déplacement de la tige lors de l'ouverture et de la fermeture de la vanne.

Des moyens de butée haute et basse, indépendants de l'obturateur, sont également prévus pour la pièce de soulèvement lors de ses déplacements.

Avantageusement aussi, la course de fermeture de l'obturateur est inférieure à la course de déplacement vers le bas de la pièce de soulèvement de façon à garantir que l'obturateur soit bien appliqué contre son siège par le ressort et que la vanne soit bien fermée lorsque la pièce de soulèvement est en butée basse.

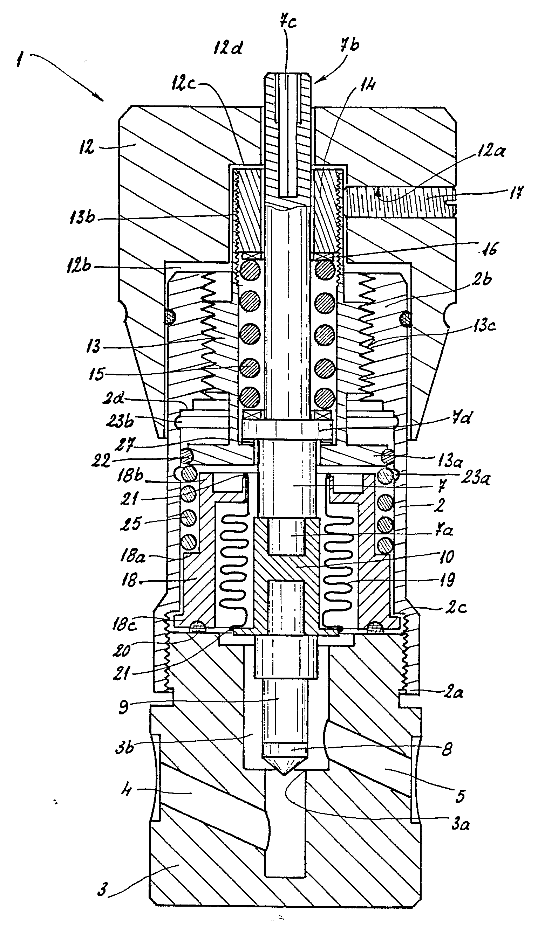

De toute façon, la vanne selon l'invention sera mieux comprise et d'autres caractéristiques de celle-ci seront mises en évidence à l'aide de la description qui suit en référence au dessin annexé, dont l'unique figure est une vue en coupe longitudinale d'une telle vanne.

Ainsi que le montre la figure, la vanne **1** selon l'invention est constituée d'un corps de vanne **2** creux de forme tubulaire ouvert et fileté à ses deux extrémités **2a,2b**.

Ce corps de vanne **2** est recouvert à son extrémité supérieure **2b** d'une tête de vanne **12** et est raccordé par vissage à son extrémité inférieure **2a** à une embase **3**, contenant le siège **3a** de l'obturateur et deux conduits **4,5** respectivement d'arrivée et de sortie du fluide de travail, qui débouchent chacun dans une cavité **3b** de l'embase.

A l'intérieur du corps de vanne **2**, coaxialement à celui-ci, sont disposés l'obturateur **8** proprement dit de la vanne et sa tige de commande **7**.

L'obturateur **8** a la forme d'un pointeau et coopère de façon connue en soi avec le siège **3a** de l'embase pour établir ou couper la communication entre les conduits **4,5**.

Cet obturateur **8** est fixé sur un support d'obturateur **9** qui est lui-même monté de façon amovible (par vissage avec collage frein) à une extrémité d'une pièce de jonction **10** ayant en section transversale la forme d'un H, et fixée, à son autre extrémité, à l'extrémité inférieure **7a** de la tige de commande **7**.

Cette disposition permet d'enlever et de changer facilement l'obturateur **8** par simple dévissage de son support **9**.

La tige de commande **7** est munie, à son autre extrémité **7b**, d'un trou hexagonal **7c** apte à recevoir une clef destinée à permettre l'immobilisation en rotation de la tige **7** lors du remplacement de l'obturateur **8**.

Ce trou **7c** est fileté intérieurement sur une partie de sa longueur afin de recevoir un index (non représenté sur le dessin) destiné à indiquer la position, ouverte ou fermée, de la vanne.

Enfin, la tige de commande **7** présente, à proximité de son extrémité inférieure **7a**, une collerette annulaire **7d** dont le rôle sera expliqué plus loin.

La tige de commande **7** est montée coaxialement à l'intérieur d'une pièce de soulèvement **13** de forme tubulaire et essentiellement cylindrique. Cette pièce de soulèvement est munie, dans sa partie médiane, d'un filetage extérieur **13c** coopérant avec le filetage intérieur de l'extrémité supérieure **2b** du corps de vanne pour permettre le déplacement vertical de cette pièce par rapport au corps de vanne **2** par simple vissage/dévissage.

La pièce de soulèvement **13** est munie, à son extrémité inférieure, d'une large bride annulaire **13a** saillant à la fois vers l'intérieur et vers l'extérieur de cette pièce **13**.

La partie saillant vers l'intérieur de cette bride **13a** coopère avec la collerette **7d** de la tige de commande pour entraîner celle-ci vers le haut lors du déplacement dans ce sens de la pièce de soulèvement **13**.

Deux rondelles de friction en téflon **27** sont interposées entre la bride **13a** et la collerette **7d** de façon à empêcher un blocage entre celles-ci lors de la rotation de la pièce **13**, la tige **7** ne tournant pas.

Comme il ressort du dessin, la partie saillant vers l'extérieur de la bride annulaire **13a** est munie, sur sa périphérie, d'un joint torique **22** inséré dans une gorge annulaire non référencée. Il est prévu, par ailleurs, sur la face intérieure de la paroi du corps de vanne **2** deux gorges annulaires **23**, à savoir une gorge inférieure **23a** et une gorge supérieure **23b** destinées à recevoir le joint torique **22** respectivement en position fermée et en position ouverte de la vanne **1**.

Lors du mouvement en translation du bas vers le haut et réciproquement de la pièce de soulèvement **13**, le joint torique **22** se trouve comprimé entre la bride **13a** et la face intérieure de la paroi du corps de vanne **2** et joue ainsi un rôle de frein au déplacement de la pièce **13**. En outre, les gorges annulaires **23a** et **23b** assurent un blocage relatif de la pièce **13** dans ses deux positions extrêmes de déplacement. Ces dispositions empêchent efficacement une ouverture ou une fermeture accidentelle de la vanne **1**.

Enfin, à son extrémité supérieure **13b**, la pièce de soulèvement **13** est filetée intérieurement et reçoit une vis de compression **14**, percée sur toute sa longueur et enfilée sur l'extrémité supérieure de la tige de commande **7**. Cette vis de compression est munie, à son extrémité supérieure, d'empreintes (non représentées sur le dessin) destinées à permettre la rotation de la vis à l'aide d'un outil.

La pièce de soulèvement **13** est solidarisée à la tête de vanne **12** au moyen d'une vis de pression **17** vissée dans un trou radial **12a** de cette tête de vanne et agissant sur la paroi externe de cette pièce **13**.

La tête de vanne **12** a essentiellement la forme d'un capuchon venant coiffer l'extrémité du corps de vanne **2** et présente intérieurement deux cavités cylindriques **12b,12c** séparées par un épaulement et destinées à loger respectivement l'extrémité supérieure **2b** du corps de vanne et l'extrémité supérieure **13b** de la pièce de soulèvement **13**.

Cette tête de vanne **12** est également munie d'un trou central traversant **12d** qui débouche dans la cavité **12c** et permet le passage de la tige de commande **7**.

Un ressort de compression **15** est monté autour de la tige de commande **7** entre les faces en bout tournées l'une vers l'autre de la collerette **7d** de la tige de commande **7** et de la vis de compression **14**.

Une rondelle de friction ou un roulement **16** est interposé entre chacune des extrémités du ressort **15** et la face associée de la vis **14** ou de la collerette **7d**.

Ce ressort **15** sollicite la tige de commande **7**, et donc l'obturateur **8**, vers le bas pour assurer la fermeture de la vanne.

La puissance de ce ressort est bien évidemment choisie en fonction de la pression de fermeture désirée sur l'obturateur **8**. Cependant, l'effort exercé par le ressort **15** peut être modifié en vissant ou dévissant la vis de compression **14**. Il est ainsi possible d'effectuer un tarage de la pression de fermeture de l'obturateur en fonction de l'utilisation de la vanne.

A l'extrémité inférieure du corps de vanne **2** est également logée une pièce tubulaire **18** qui est maintenue appliquée contre la partie supérieure de l'embase **3** par un épaulement **2c** du corps de vanne coopérant avec un épaulement **18c** de cette pièce et qui remplit plusieurs fonctions. Cette pièce **18** est, tout d'abord, destinée à assurer l'étanchéité entre la cavité **3b** de l'embase **3** et l'intérieur du corps **2** de la vanne. Elle est donc reliée à la pièce de jonction **10** par l'intermédiaire d'un soufflet métallique **19** qui est fixé sur les deux pièces par une soudure au plasma **21**.

La pièce **18** repose, par ailleurs, par son extrémité inférieure, sur l'embase **3** par l'intermédiaire d'un joint d'étanchéité **20**.

Le soufflet métallique assure, avec le joint **20**, une parfaite étanchéité entre la cavité **3b** et l'intérieur du corps de vanne **2**, même lors du déplacement de la tige de commande **7**.

L'extrémité supérieure **18b** de la pièce tubulaire **18** coopère également avec la bride **13a** de la pièce de soulèvement **13** pour constituer une butée basse pour cette dernière.

Enfin, cette pièce **18** présente un épaulement **18a** recevant un ressort de compensation **25**.

Le ressort de compensation **25** est un ressort de compression comprimé entre la face inférieure de la bride **13a** et l'epaulement **18a**. Il agit en sens inverse du ressort **15** et sollicite donc la pièce de soulèvement **13** vers le haut. Un autre ressort de compensation **25a** peut être placé entre la face supérieure de la bride **13a** et l'epaulement **2d** pour éviter une ouverture intempestive de la vanne, surtout dans le cas d'une vanne haute pression.

Dans l'exemple de réalisation montré à la figure, la vanne est en position intermédiaire entre sa position ouverte et sa position fermée, son obturateur **8** étant soulevé de son siège.

La fermeture de cette vanne s'effectue par rotation de la tête de vanne **12**, cette rotation entraînant une rotation simultanée de la pièce de soulèvement **13** par rapport au corps de vanne **2** et un déplacement vers le bas de celle-ci le long du filetage **2b**. La tige de commande **7** se déplace simultanément vers le bas sous l'effet du ressort **15**, et c'est donc ce dernier qui applique l'obturateur **8** contre son siège et réalise la fermeture de la vanne. Ainsi qu'il l'a déjà été précisé ci-avant, la pression de fermeture exercée par le ressort **15** peut être réglée à l'aide de la vis **14**.

Le vissage de la pièce **13** est effectué jusqu'à ce que la bride **13a** de celle-ci arrive en butée contre l'extrémité supérieure **18b** de la pièce **18**. Cette arrivée en butée indique à l'opérateur que la vanne est bien fermée.

On notera que les courses de déplacement de l'obturateur **8** par rapport à son siège et de la pièce de soulèvement **13** par rapport à la pièce **18** sont calculés de façon que l'obturateur **8** soit appliqué contre son siège par le ressort **15**, avant que la pièce **13** n'arrive en butée contre la pièce **18**, ce qui permet de garantir la fermeture de la vanne, avant l'arrivée en butée de cette pièce **13**.

Les courses de déplacement peuvent également être déterminées de façon que la vanne soit fermée dès le début de la rotation de la pièce de soulèvement **13**.

Puisque c'est le ressort **15** qui applique l'obturateur contre son siège, la pression de fermeture est constante et il n'y a aucun risque de détérioration du plan de joint de l'obturateur par application d'un effort de serrage trop important sur la tête de vanne **12**.

Bien entendu, il est possible d'obtenir par modification du filetage **13c**, une fermeture plus ou moins rapide de la vanne. Par exemple, un filetage à pas rapide permettra la fermeture de la vanne en un quart de tour, tandis qu'un filetage à pas fins permettra la fermeture de la vanne en plusieurs tours. Dans le cas d'une vanne à fermeture en un quart de tour, on utilisera, de préférence, un filetage **13c** à plusieurs filets déportés, permettant de réduire les dimensions et d'équilibrer les efforts.

Pour l'ouverture de la vanne, il suffit de tourner la tête de vanne **12** en sens inverse, de façon à déplacer la pièce de soulèvement **13** vers le haut. Cette dernière entraîne alors avec elle la tige de commande **7** par l'intermédiaire de la bride **13a** et de la collerette **7d**, comme expliqué précédemment, le soulèvement de la pièce **13** étant aidé par le ressort de compensation **25** agissant à l'encontre du ressort **15**.

On notera que le ressort de compensation **25** exerce, lors de la fermeture de la vanne, une certaine résistance au vissage, tandis que, pour l'ouverture de la vanne, c'est le ressort **15** qui exerce une résistance au dévissage.

La prévision du ressort **25** permet donc d'avoir une résistance sensiblement identique à la fermeture et à l'ouverture de la vanne, ce qui ne serait pas le cas si seul le ressort **15** était prévu.

On notera, en outre, que les deux ressorts **15,25** n'agissent pas directement l'un sur l'autre du fait de la présence du filetage **13c**.

Lors de son déplacement par rapport au corps de vanne **2**, la tige de commande **7** fait saillie ou, au contraire, se déplace vers l'intérieur par rapport à la tête de vanne **12**, puisque le déplacement de cette tige **7** est inférieur à celui de la pièce **13**, et donc de la tête **12**, ce qui permet de visualiser parfaitement l'état fermé ou ouvert de la vanne.

Cette indication peut encore être améliorée par la prévision à l'extrémité de la tige de commande d'un index vissé sur celle-ci.

Bien entendu, la présente invention ne se limite pas à la seule forme de réalisation montrée ci-avant.

C'est ainsi que, par exemple, la tête de vanne **12** peut être remplacée par un levier fixé à la partie supérieure de la pièce soulèvement **13** et prenant appui sur la partie supérieure du corps de vanne **2** pour soulever ou abaisser la pièce **13**.

La vanne peut également être équipée d'un obturateur en forme d'aiguille et d'un filetage **13c** très fin pour un réglage micrométrique de son ouverture/fermeture.

Enfin, la vanne selon l'invention peut être adaptée et utilisée pour remplacer des robinets d'eau ou de fluide type classique, sans que l'on sorte pour autant du cadre de la présente invention.

**Revendications**

**1-** Vanne manuelle du type comportant un obturateur (8) fixé à l'extrémité d'une tige de commande (7) apte à être déplacée à l'intérieur du corps de vanne (2) perpendiculairement au siège (3a) de l'obturateur à l'aide d'un système mécanique commandé manuellement (12,2b), caractérisée en ce qu'elle comporte une pièce de soulèvement (13) apte à se déplacer à l'intérieur du corps de vanne (2) perpendiculairement au siège (3a) de l'obturateur et actionnée directement par le système mécanique (12,2b) et en ce que le mouvement de déplacement de cette pièce (13) est transmis à la tige de commande (7) par l'intermédiaire d'un ressort (15), lorsque cette pièce se déplace vers le bas.

**2-** Vanne manuelle selon la revendication 1, caractérisée en ce que le ressort (15) est monté entre une partie (14) de la pièce (13) et une collerette (7d) de la tige de commande (7).

**3-** Vanne manuelle selon la revendication 2, caractérisée en ce que la partie (14) de la pièce (13) est apte à se déplacer par vissage le long d'un filetage (13b) de la pièce (13), afin de comprimer plus ou moins le ressort (15).

4- Vanne manuelle selon les revendications 1 à 3, caractérisée en ce que la pièce (13) est constituée par une pièce tubulaire (13) montée à l'intérieur du corps de vanne (2) autour de la tige de commande (7) et apte à se déplacer perpendiculairement au siège (3a) de l'obturateur le long d'un filetage (2b) de ce corps (2) et en ce que cette pièce (13) est solidaire de la tête de vanne (12), son déplacement étant commandé par la rotation de cette tête (12).

5- Vanne manuelle selon la revendication 4, caractérisée en ce que la tête de vanne (12) est munie d'un trou traversant (12d) pour le passage de l'extrémité supérieure (7b) de la tige de commande (7) hors de la vanne.

6- Vanne manuelle selon la revendication 5, caractérisée en ce que l'extrémité supérieure (7b) de la tige de commande est munie d'un filetage (7c) destiné à la fixation d'un index ou similaire.

7- Vanne manuelle selon la revendication 2, caractérisée en ce que la pièce (13) est munie d'une bride (13a) apte à coopérer avec la collerette (7d) de la tige de commande (7) pour entraîner celle-ci lors de son déplacement vers le haut.

8- Vanne manuelle selon la revendication 7, caractérisée en ce qu'il est prévu un ressort (25) monté entre l'extrémité inférieure (13a) de la pièce (13) et la partie supérieure de l'embase (3) et en ce que ce ressort (25) sollicite la pièce (13) vers le haut.

9- Vanne manuelle selon la revendication 7 ou la revendication 8, caractérisée en ce que des butées haute (2d) et basse (18b) sont prévues pour la pièce (13) et en ce qu'il est prévu, sur la périphérie de la bride (13a), un joint torique (22) destiné à s'engager au moins partiellement dans une gorge annulaire supérieure (23b) en position ouverte de la vanne (1), et dans une gorge annulaire inférieure (23a) en position fermée de la vanne (1), ces gorges annulaires (23a,23b) étant ménagées à l'intérieur du corps de vanne (2).

10- Vanne manuelle selon la revendication 9, caractérisée en ce que la course de déplacement de la pièce (13) est supérieure à la course de déplacement de l'obturateur (8).

11- Vanne manuelle selon l'une quelconque des revendications 4 à 9, caractérisée en ce que le filetage (2b,13c) comprend au moins deux filets déportés.